# EUROPÄISCHE PATENTANMELDUNG

(11) **EP 3 196 031 A1**
(43) Veröffentlichungstag der Anmeldung: **26.07.2017**
(21) Anmeldenummer: 16199436.3
(22) Anmeldetag: 18.11.2016
(51) Int. Cl.: B41J 3/407, B41J 11/00, B41J 11/42

(54) **VERFAHREN ZUM BEDRUCKEN EINES OBJEKTS**

(30) Priorität: 18.12.2015 DE 102015225957
(71) Anmelder: Heidelberger Druckmaschinen AG, 69115 Heidelberg (DE)
(72) Erfinder: Grandt, Helge, 68799 Reilingen (DE); Matern, Alexander, 68723 Oftersheim (DE); Möhringer, Markus, 69469 Weinheim (DE)

(57) **Zusammenfassung**

Ein erfindungsgemäßes Verfahren zum Bedrucken eines Objekts, zum Beispiel einer Kugel, wobei ein nicht bedruckbarer Bereich (10) und ein bedruckbarer Bereich (9) des Objekts (2) mittels eines Sensors (7), zum Beispiel eines Abstandssensors, erfasst werden und wobei das Objekt mittels eines Druckkopfs (5), vorzugsweise im Tintenstrahl-Druckverfahren, mit einem Druckbild bedruckt wird, zeichnet sich dadurch aus, dass Manipulationen am Druckbild und/oder am Objekt durchgeführt werden. Die Manipulationen erfolgen derart, dass das Druckbild im bedruckbaren Bereich zu liegen kommt und/oder dass eine Lücke im Bildbereich des Druckbilds im nicht bedruckbaren Bereich des Objekts zu liegen kommt.

## Beschreibung

Die vorliegende Erfindung betrifft ein Verfahren zum Bedrucken eines Objekts mit den Merkmalen des Oberbegriffs von Anspruch 1.

Die Erfindung liegt auf dem technischen Gebiet des Bedruckens von Objekten, das heißt dreidimensionalen Körpern, vorzugsweise mit gekrümmten Oberflächen, wobei als Druckverfahren bevorzugt die Tintenstrahl-Technologie verwendet wird.

Aus der DE 10 2015 203 798 A1 ist bereits eine Druckmaschine bekannt, welche im Tintenstrahl-Druckverfahren Objekte, beispielsweise Bälle, bedruckt. Die Objekte werden von einem Roboter gehalten und zu den Druckköpfen geführt. Im Wirkbereich der Druckköpfe werden die Bälle rotiert, so dass ein Druckbild auf der kugelförmigen Oberfläche erzeugt werden kann. Ein solches Druckbild kann beispielsweise ein Streifen entlang des Äquators der Kugel sein.

Beim Bedrucken von Objekten kann das Problem auftreten, dass die Objekte keine geschlossene Oberfläche aufweisen. Bälle können beispielsweise aus einzelnen Segmenten zusammengenäht sein. Die Nahtstellen sind dabei nach innen gewölbt und bilden daher Vertiefungen aus, in die nicht hinein gedruckt werden kann oder nicht hinein gedruckt werden soll, da an diesen Stellen kein störungsfreies Druckbild erzeugt werden kann.

Aus der DE OS 24 52 393 ist bereits eine Maschine zum Bedrucken von Objekten bekannt, welche eine mechanische Abstandssonde aufweist. Bei einem kistenförmigen Objekt mit hervorstehenden Leisten kann mittels der Sonde die Position der Leisten mechanisch ermittelt werden. Ein Druckkopf wird daraufhin aktiviert, wenn durch die Sonde festgestellt wurde, dass sich der Druckkopf nicht im Bereich einer hervorstehenden Leiste befindet.

Vor dem Hintergrund des Standes der Technik ist es eine Aufgabe der vorliegenden Erfindung, ein verbessertes Verfahren zum Bedrucken eines Objektes zu schaffen, welches es ermöglicht, Störungen des Druckbildes und/oder ein Bedrucken des Objektes an Stellen, welche das Druckbild potentiell stören, auf einfache Weise und effektiv zu vermeiden.

Eine erfindungsgemäße Lösung dieser Aufgabe stellt das Verfahren mit den Merkmalen von Hauptanspruch 1 dar.

Ein erfindungsgemäßes Verfahren zum Bedrucken eines Objektes, wobei ein nicht bedruckbarer Bereich und ein bedruckbarer Bereich des Objekts mittels eines Sensors erfasst werden und wobei das Objekt mittels eines Druckkopfs mit einem Druckbild bedruckt wird, zeichnet sich dadurch aus, a) dass a1) die Größe und/oder die Form des Druckbilds und/oder a2) die Größe und/oder die Form des Objekts derart manipuliert wird, dass ein Bildbereich des Druckbilds im bedruckbaren Bereich des Objekts liegt, und/oder b) dass b1) die Position und/oder die Ausrichtung des Druckbilds und/oder b2) die Position und/oder die Ausrichtung des Objekts derart manipuliert wird, dass ein Bildbereich des Druckbilds im bedruckbaren Bereich des Objekts liegt und ein Nichtbildbereich des Druckbilds, welcher eine Lücke im Bildbereich des Druckbilds darstellt, im nicht bedruckbaren Bereich des Objekts liegt.

Das erfindungsgemäße Verfahren ermöglicht es in vorteilhafter Weise, ein beliebiges Objekt mit einem beliebigen Druckbild zu versehen und dabei Störungen des Druckbildes oder ein Bedrucken des Objekts an potentiellen Störstellen zu vermeiden. Auf diese Weise kann mit der Erfindung mit Vorteil ein sehr präzises Bedrucken des Objekts erreicht werden.

Das Objekt weist zumindest einen nicht bedruckbaren Bereich und zumindest einen bedruckbaren Bereich auf. Die Bereiche können benachbart liegen. Der bedruckbare Bereich kann beispielsweise eine Fläche des Objekts sein, die keinerlei wesentlichen hervor- oder zurücktretenden Abschnitte aufweist. Beim Beispiel eines aus Flicken zusammengesetzten Balles kann dies beispielsweise die relativ glatte Fläche eines Flickens sein. Ein nicht bedruckbarer Bereich kann beispielsweise eine hervortretende oder eine zurücktretende Stelle der Oberfläche sein. Beim Beispiel des Balls kann dies zum Beispiel die Fügestelle, insbesondere Naht zwischen zwei Flicken sein. Nicht bedruckbare Bereiche können aber zum Beispiel auch raue Oberflächenbereiche oder beschichtete Oberflächenbereiche sein, welche Tinte nur schlecht annehmen würden. Nicht bedruckbare Bereiche können auch bereits zuvor bedruckte oder anderweitig behandelte, z. B. lackierte Oberflächenbereiche sein, welche nicht erneut bedruckt werden sollen.

Gemäß Merkmal a) werden erfindungsgemäß die Größe und/oder die Form des Druckbilds und/oder des Objekts manipuliert. Das Druckbild kann manipuliert werden, indem die Daten des Druckbildes von einem Rechner derart verändert werden, dass die Größe, das heißt der Flächeninhalt, des Druckbildes oder dessen Form, das heißt dessen Berandung, verändert werden. Eine solche Anpassung bzw. Berechnung kann in der sogenannten Druckvorstufe geschehen. Eine Änderung der Größe und/oder Form des Objektes kann beispielsweise bei luftgefüllten Objekten durch ein Einbringen oder Ablassen von Luft, beispielsweise über ein Ventil des Objekts, erreicht werden. Bei flexiblen Objekten ist auch ein Biegen des Objektes denkbar.

Gemäß Merkmal b) der Erfindung wird die Position und/oder die Ausrichtung des Druckbilds und/oder des Objekts manipuliert. Dabei wird darauf geachtet, dass eine Lücke des Druckbildes mit dem nicht bedruckbaren Bereich des Objekts in Deckung gebracht wird. Am Beispiel eines mit einem Schriftzug zu bedruckenden Balls kann dies beispielsweise derart geschehen, dass eine Leerstelle, beispielsweise ein oder mehrere Leerzeichen, im Schriftzug mit der Naht zwischen zwei Flicken des Balles in Deckung gebracht wird. Die Manipulation kann durch Bewegen des Druckkopfs und/oder des Objekts erfolgen. Die Manipulation kann auch erfolgen, indem der Druckkopf zeitversetzt mit den Druckdaten und/oder mit entsprechend veränderten Druckdaten angesteuert wird.

Erfindungsgemäß wird der nicht bedruckbare Bereich des Objekts mit einem Sensor erfasst. Als ein solcher Sensor kann bevorzugt ein Abstandssensor eingesetzt werden, bevorzugt ein Ultraschall- oder Laser-Abstandssensor. Ein solcher Sensor kann in einer Druckmaschine zum Bedrucken von Objekten bereits vorhanden sein, da das Objekt vor dem Bedrucken oftmals vermessen wird. Dabei wird das Objekt beispielsweise einmal rotiert oder linear bewegt und mittels des Abstandssensors seine Oberfläche bzw. deren Profil im Wirkbereich des Druckkopfs erfasst. Auf diese Weise kann der Abstand zwischen dem Objekt und dem Druckkopf nachjustiert werden, so dass beim späteren Bedrucken der Druckkopf möglichst nahe an das Objekt gebracht werden kann (oder umgekehrt) und trotzdem keine Kollision des Druckkopfs mit dem Objekt erfolgt. Ein solcher, bereits vorhandener Abstandssensor (z.B. zur Kollisionsvermeidung) kann somit im Rahmen der Erfindung multifunktional verwendet werden: zum einen zur beschriebenen Abstandsmessung und/oder Kollisionsvermeidung, zum anderen zum Erfassen nicht bedruckbarer und bedruckbarer Bereiche, um erfindungsgemäß einen störungsfreien Druck auf der Objektoberfläche zu platzieren.

Die Messung mit dem Sensor erfolgt bevorzugt direkt vor dem Bedrucken des individuellen Objekts, d.h. eines Objekts mit einem individuellen Höhenprofil (jeder Ball ist z.B. ein kleinwenig anders geformt). Die Messdaten werden bevorzugt direkt an den Rechner geleitet und von diesem ohne wesentlichen Zeitverzug erfindungsgemäß ausgewertet. Auf diese Weise kann das Bedrucken Sekunden nach dem Ausmessen erfolgen, also für den Bediener mit kaum bemerkbarem zeitlichem Aufschub. Dies ist insbesondere beim drucktechnischen Individualisieren von Produkten am so genannten Point-of-Sale von großem Vorteil, da der Kunde in der Regel nicht lange warten möchte, jedoch immer ein perfektes Druckbild erwartet.

Die Manipulation der Größe/Form und/oder Position/Ausrichtung (von Druckbild und/oder Objekt) kann auch in der Weise erfolgen, dass das Druckbild und/oder das Objekt in Teile zerlegt wird und dass in Kenntnis und unter Nutzung der gewonnenen Sensor-Messwerte (d.h. der ermittelten bedruckbaren /nicht bedruckbaren Bereiche) das Druckbild bzw. dessen Teile in bedruckbare Bereiche des Objekt bzw. dessen Teile platziert wird und dass - wo erforderlich - Lücken (oder wenigsten eine Lücke) im Druckbild mit den nicht bedruckbaren Bereichen in Deckung gebracht werden.

Eine bevorzugte Weiterbildung des erfindungsgemäßen Verfahrens kann sich dadurch auszeichnen, dass bei Schritt a) das Druckbild und/oder das Objekt verkleinert, vergrößert oder verformt wird.

Eine weitere bevorzugte Weiterbildung des erfindungsgemäßen Verfahrens kann sich dadurch auszeichnen, dass bei Schritt a) ein Nichtbildbereich des Druckbildes, welcher eine Lücke im Bildbereich des Druckbilds darstellt, im nicht bedruckbaren Bereich des Objekts liegt.

Eine weitere bevorzugte Weiterbildung des erfindungsgemäßen Verfahrens kann sich dadurch auszeichnen, dass bei Schritt b) das Druckbild und/oder das Objekt verschoben und/oder gedreht wird.

Eine weitere bevorzugte Weiterbildung des erfindungsgemäßen Verfahrens kann sich dadurch auszeichnen, dass der nicht bedruckbare Bereich und/oder der bedruckbare Bereich rechentechnisch bestimmt werden. Hierzu können die vom Sensor ermittelten Daten verwendet, d.h. einem Rechner übergeben werden.

Die Erfindung betrifft weiterhin auch eine Druckmaschine oder einen Drucker zur Durchführung des oben beschriebenen erfindungsgemäßen Verfahrens oder einer seiner bevorzugten Weiterbildungen. Eine solche Maschine weist einen Rechner auf, welcher die erfindungsgemäß erforderlichen Manipulationen auf Grundlage der vom Sensor erfassten Daten berechnet und an die Maschine weiterleitet und/oder die Maschine entsprechend steuert.

Die Erfindung und deren vorteilhafte Weiterbildungen werden nachfolgend mit Bezug auf die zugehörigen Zeichnungen beschrieben. Die Zeichnungen zeigen:
- Figur 1A:: Eine schematische Ansicht einer Druckmaschine bei der Durchführung einer bevorzugten Ausführungsform des erfindungsgemäßen Verfahrens;
- Figur 1B:: Dieselbe Maschine in anderer Ansicht und eine bei der Durchführung des erfindungsgemäßen Verfahrens erhaltene Messkurve;
- Figuren 2A bis 2E:: Schematische Darstellungen der Bildbereiche, Nichtbildbereiche, bedruckbaren Bereiche und nicht bedruckbaren Bereiche.

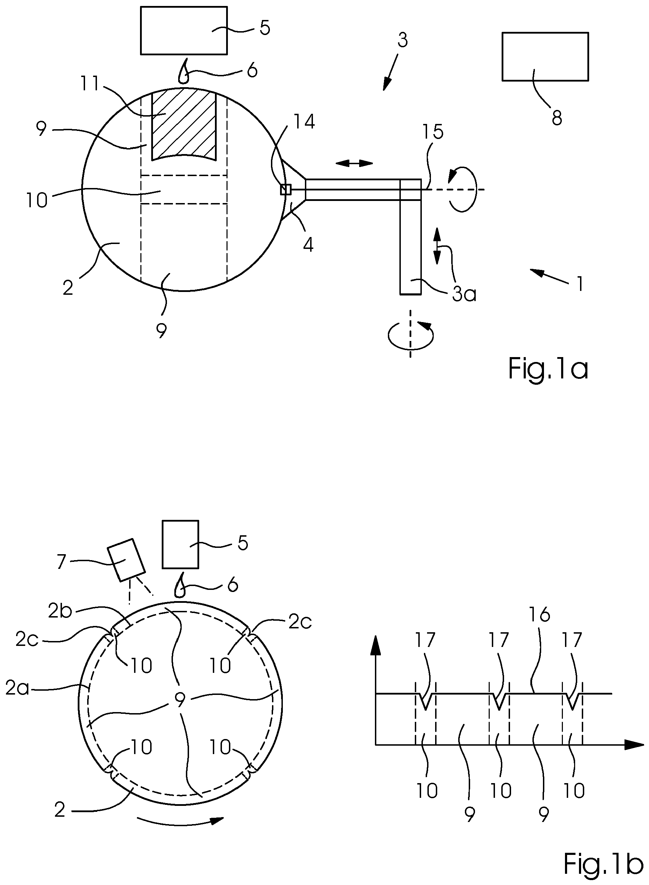

Figur 1A zeigt eine Druckmaschine 1 in schematischer Darstellung von der Seite. Die Druckmaschine hält und bewegt ein Objekt 2, welches aus Objektsegmenten 2a und 2b (vergleiche Figur 1B) zusammengesetzt ist. Zwischen den Objektsegmenten befindet sich eine Fügestelle 2c, z.B. eine Naht oder Kante. Diese Fügestelle bzw. ein sie umgebender Bereich bildet einen nicht bedruckbaren Bereich 10.

Die Druckmaschine 1 weist einen Roboter 3 auf, welcher über verschiedene Antriebe das Objekt 2 sowohl in der Höhe als auch radial linear bewegen kann und sowohl um eine vertikale als auch um eine horizontale Achse drehen kann. Über die Höhenachse 3a ist eine Abstandskorrektur des Objekts 2 bzw. dessen Oberfläche zum Druckkopf 5 möglich. Die Druckmaschine umfasst weiterhin einen Halter 4, welcher das Objekt 2 beispielsweise saugend festhält. Der Druckkopf 5 überträgt Tinte 6 auf die Oberfläche des Objekts 2 und erzeugt dort ein Druckbild 11. Wie in Figur 1A erkennbar, liegt das Druckbild 11 innerhalb eines bedruckbaren Bereichs 9 und nicht innerhalb eines nicht bedruckbaren Bereichs 10 bzw. außerhalb dessen auf der Oberfläche des Objekts 2. Das Objekt 2 weist weiterhin ein Ventil 14 auf, welches mit einer Leitung 15 in Verbindung steht. Durch Einbringen oder Ablassen eines Mediums, beispielsweise Luft, kann auf diese Weise die Größe des Objekts 2 manipuliert werden.

Figur 1A zeigt weiterhin einen Rechner 8. Der Rechner dient der Verarbeitung der Druckdaten und dem Ansteuern der Druckmaschine 1. Insbesondere steuert der Rechner die erfindungsgemäßen Manipulationen am Druckbild und/oder am Objekt 2.

In Figur 1B sind links die Druckmaschine 1 und das Objekt 2 ebenfalls schematisch, jedoch von vorne gezeigt. Neben dem Druckkopf 5 ist ein Sensor 7 angeordnet. Dieser Sensor misst bevorzugt den Abstand zur Oberfläche des Objektes bzw. dessen Höhenprofil. In Figur 1B ist rechts eine Messkurve gezeigt. Dort ist über dem Messweg entlang der Oberfläche des Objektes der Abstand der Objektoberfläche vom Druckkopf bzw. das Höhenprofil der Oberfläche aufgetragen. Man erkennt, dass die Messkurve 16 Signale 17 aufweist, die mit den nicht bedruckbaren Bereichen 10 korrespondieren. Zwischen den nicht bedruckbaren Bereichen 10 liegen die bedruckbaren Bereiche 9. Der Rechner 8 kann die Signale erkennen und auf diese Weise die bedruckbaren Bereiche 9 von den nicht bedruckbaren Bereichen 10 trennen bzw. deren jeweilige Lage und Ausdehnung bestimmen.

Das erfindungsgemäße Verfahren kann nun bevorzugt derart ablaufen, dass das Objekt 2 von dem Roboter 3 um eine bevorzugt horizontale Achse rotiert wird. Dabei wird mittels des Sensors 7 der Abstand bzw. das Höhenprofil vermessen. Aus dieser Messung können die nicht bedruckbaren Bereiche 10 und die bedruckbaren Bereiche 9 auf der Oberfläche des Objekts ermittelt werden. Im gezeigten Beispiel entsprechen die nicht bedruckbaren Bereiche 10 den Fügestellen bzw. tiefer liegenden Kanten 2c zwischen den Objektsegmenten 2a und 2b.

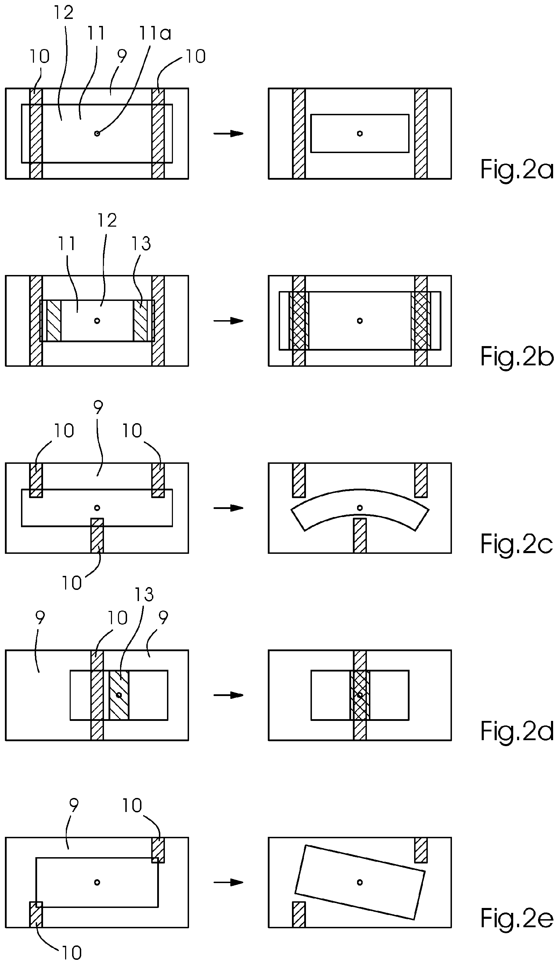

In Figur 2 ist nun schematisch dargestellt, wie die Manipulationen des Druckbildes erfindungsgemäß durchgeführt werden. Dabei ist jeweils auf der linken Seite das Druckbild vor der Manipulation und auf der rechten Seite das Druckbild nach der Manipulation gezeigt. Für den Fachmann ist klar, dass anstelle einer Manipulation des Druckbildes eine entsprechende (inverse) Manipulation des Objektes durchgeführt werden kann. Beispielsweise kann anstelle des Verkleinerns des Druckbildes auch ein Vergrößern des Objektes erfolgen. Die in Figur 2 dargestellten Manipulationen sind daher nur beispielhaft zu verstehen und sollen Art und Anzahl der möglichen Manipulationen nicht einschränken. In den Figuren 2A bis E werden sich entsprechende Merkmale mit denselben Bezugszeichen versehen. Zur besseren Erkennbarkeit sind sich wiederholende Bezugszeichen in den Figurenteilen weggelassen worden.

Figur 2A zeigt eine Manipulation, bei der das Druckbild verkleinert wird. Dabei bleibt die Mitte des Druckbilds 11A im Wesentlichen unverändert an ihrer Position. Das Druckbild 11 bzw. dessen Ränder kommen dadurch innerhalb des bedruckbaren Bereichs 9 zu liegen und ein Überdecken des Druckbilds 11 mit den nicht bedruckbaren Bereichen 10 wird erfindungsgemäß vermieden. Das Verkleinern (oder ein Vergrößern) kann auch mit einem Verschieben, Drehen und/oder Verformen kombiniert werden. Zum Verkleinern des Druckbilds kann z.B. die Anzahl der Pixel rechentechnisch verringert werden. Zu einem entsprechenden (bevorzugt reversiblen) Vergrößern des Objekts 2 kann z.B. das Objekt aufgeblasen oder gedehnt werden. Umgekehrt kann es (bevorzugt reversibel) geschrumpft oder gestaucht werden.

In Figur 2B ist eine Manipulation dargestellt, bei der das Druckbild 11 vergrößert wird. Dabei wird die Manipulation so durchgeführt, dass Lücken 13 (oder wenigstens eine Lücke) im Druckbild mit den nicht bedruckbaren Bereichen 10 in Deckung gebracht werden. Das Druckbild bleibt auf diese Weise störungsfrei, denn die störenden, nicht bedruckbaren Bereiche liegen innerhalb der Lücken des Druckbilds. Umgekehrt kann auch die Ausdehnung des Objekts verringert werden, z.B. durch Ablassen von Luft.

Figur 2C zeigt eine Manipulation, bei der das Druckbild 11 verformt wird. Wiederum bleibt die Mitte des Druckbildes 11a im Wesentlichen an ihrer Position. Rechentechnisch erfolgt das Verformen bevorzugt im Rahmen einer entsprechenden Bildverarbeitung auf dem Rechner 8. Die geänderten Bilddaten werden dem Druckkopf 5 übermittelt. Auch eine Verformung des Objekts ist denkbar, z.B. ein (bevorzugt reversibles) Biegen.

Figur 2D zeigt eine Manipulation, bei der die Position des Druckbildes 11 verändert wird. Hier wird die Mitte des Druckbilds derart verschoben, dass eine Lücke 13 im Druckbild mit einem nicht bedruckbaren Bereich 10 in Deckung gebracht wird. Da der Druckkopf 5 bevorzugt unbeweglich ist, wird stattdessen das Druckbild "bewegt" bzw. verschoben, d.h. der Druckkopf wird zu einem früheren oder späteren Zeitpunkt (verglichen mit einem Zustand ohne Manipulation) mit den ansonsten bevorzugt unveränderten Druckdaten angesteuert. Umgekehrt kann natürlich auch das Objekt bewegt oder rotiert werden.

Figur 2E zeigt schließlich eine Manipulation, bei der die Ausrichtung des Druckbildes 11 verändert wird. Das Druckbild wird gedreht, so dass ein Überdecken des Druckbildes und der nicht bedruckbaren Bereiche 10 vermieden wird. Das Drehen des Druckbildes erfolgt rechentechnisch wiederum bevorzugt im Rahmen einer entsprechenden Bildverarbeitung auf dem Rechner 8. Umgekehrt ist erkennbar auch eine Änderung der Ausrichtung bzw.

Winkellage des Objekts möglich, wozu der Roboter 3 ggf. über weitere Rotationsachsen verfügt.

Die gezeigten Manipulationen können, wie bereits erwähnt, auch untereinander miteinander kombiniert werden. So ist es zum Beispiel möglich, das Druckbild sowohl zu verschieben als auch zu drehen. Oder es ist möglich, das Druckbild sowohl zu verkleinern/vergrößern als auch zu verformen.

### Bezugszeichenliste

- 1: Druckmaschine
- 2: Objekt
- 2a, 2b: Objektsegmente
- 2c: Fügestelle oder Kante
- 3: Roboter
- 3a: Höhenachse
- 4: Halter
- 5: Druckkopf
- 6: Tinte
- 7: Sensor
- 8: Rechner
- 9: bedruckbarer Bereich
- 10: nicht bedruckbarer Bereich
- 11: Druckbild
- 11a: Mitte des Druckbilds
- 12: Bildbereich
- 13: Nichtbildbereich (Lücke)
- 14: Ventil
- 15: Leitung
- 16: Messkurve
- 17: Signale

## Patentansprüche

1. Verfahren zum Bedrucken eines Objekts, wobei ein nicht bedruckbarer Bereich (10) und ein bedruckbarer Bereich (9) des Objekts (2) mittels eines Sensors (7) erfasst werden und wobei das Objekt mittels eines Druckkopfs (5) mit einem Druckbild (11) bedruckt wird,
**dadurch gekennzeichnet,**
a) **dass** a1) die Größe und/oder die Form des Druckbilds und/oder a2) die Größe und/oder die Form des Objekts derart manipuliert wird, dass ein Bildbereich (12) des Druckbilds im bedruckbaren Bereich des Objekts liegt, und/oder
b) **dass** b1) die Position und/oder die Ausrichtung des Druckbilds und/oder b2) die Position und/oder die Ausrichtung des Objekts derart manipuliert wird, dass ein Bildbereich (12) des Druckbilds im bedruckbaren Bereich des Objekts liegt und ein Nichtbildbereich (13) des Druckbilds, welcher eine Lücke (13) im Bildbereich des Druckbilds darstellt, im nicht bedruckbaren Bereich des Objekts liegt.

2. Verfahren nach Anspruch 1,
**dadurch gekennzeichnet,**
**dass** bei Schritt a) das Druckbild (11) und/oder das Objekt (2) verkleinert, vergrößert oder verformt wird.

3. Verfahren nach Anspruch 2,
**dadurch gekennzeichnet,**
**dass** bei Schritt a) ein Nichtbildbereich (13) des Druckbilds (11), welcher eine Lücke (13) im Bildbereich (12) des Druckbilds darstellt, im nicht bedruckbaren Bereich (10) des Objekts (2) liegt.

4. Verfahren nach einem der vorhergehenden Ansprüche,
**dadurch gekennzeichnet,**
**dass** bei Schritt b) das Druckbild (11) und/oder das Objekt (2) verschoben und/oder gedreht wird.

5. Verfahren nach einem der vorhergehenden Ansprüche,
**dadurch gekennzeichnet,**
**dass** als Sensor (7) ein Abstandssensor (7) verwendet wird.

6. Verfahren nach einem der vorhergehenden Ansprüche,
**dadurch gekennzeichnet,**
**dass** der nicht bedruckbare Bereich (10) und/oder der bedruckbare Bereich (9) rechentechnisch bestimmt wird.
